# FASCICULE DE BREVET EUROPEEN

(11) **EP 2 115 733 B1**
(45) Date de publication et mention de la délivrance du brevet: **24.01.2018**
(21) Numéro de dépôt: 08762121.5
(22) Date de dépôt: 19.02.2008
(51) Int. Cl.: G10K 11/172, G10K 11/168

(54) **PANNEAU ACOUSTIQUE**
SCHALLDÄMMPLATTE
ACOUSTIC PANEL

(30) Priorité: 20.02.2007 FR 0753364
(43) Date de publication de la demande: 11.11.2009
(73) Titulaire: Airbus Opérations SAS, 31060 Toulouse (FR)
(72) Inventeur: GANTIE, Fabrice, F-31000 Toulouse (FR); DUPRIEU, Bernard, F-31200 Toulouse (FR); FRUSTIE, Valérie, F-31200 Toulouse (FR); PORTE, Alain, F-31770 Colomiers (FR); GILLES, Thomas, 31850 Montrabe (FR); LALANE, Jacques, F-31650 Saint Orens de Gameville (FR)
(74) Mandataire: Fantin, Laurent
(86) Numéro de dépôt international: PCT/FR2008/050273
(87) Numéro de publication internationale: WO 2008/113931

(56) Documents cités:
- EP-A- 1 111 584
- EP-A1- 1 355 294
- EP-B- 1 398 473
- WO-A-01/48734
- FR-A- 2 821 788
- FR-A- 2 844 304
- FR-A- 2 865 309
- US-A- 4 487 793
- US-A- 5 653 836

## Description

La présente invention se rapporte à un panneau pour le traitement acoustique destiné à être rapporté au niveau d'une surface d'un aéronef et plus particulièrement à la couche acoustiquement résistive dudit panneau.

Pour limiter l'impact des nuisances sonores à proximité des aéroports, les normes internationales sont de plus en plus contraignantes en matière d'émissions sonores.

Des techniques ont été développées pour réduire le bruit émis par un aéronef, et notamment le bruit émis par un ensemble propulsif, en disposant, au niveau des parois des conduits, des revêtements visant à absorber une partie de l'énergie sonore, notamment en utilisant le principe des résonateurs d'Helmholtz. De manière connue, un revêtement pour le traitement acoustique, également appelé panneau acoustique, comprend de l'extérieur vers l'intérieur une couche poreuse acoustiquement résistive, au moins une structure alvéolaire et une couche réflectrice ou imperméable.

La couche acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

Une couche acoustiquement résistive est soumise à différentes contraintes.

La couche acoustiquement résistive en contact avec les écoulements aérodynamiques est soumise à de fortes contraintes.

Des couches acoustiquement résistives sont notamment décrites dans les documents FR-2.844.304, FR-2.821.788, EP-1.111.584 et US-5.653.836. La couche acoustiquement résistive comprend une tôle présentant une pluralité d'orifices et associée à un tissu avec des mailles très fines. Les orifices de la tôle ont une section relativement importante et sont uniformément répartis

Les orifices pratiqués dans la couche acoustiquement résistive génèrent des perturbations au niveau des écoulements aérodynamiques s'écoulant en surface de la couche acoustiquement résistive qui réduisent les caractéristiques aérodynamiques de l'aéronef. Or, ces perturbations sont sensiblement proportionnelles à la section des orifices.

Cependant, la réduction de la section des orifices conduit à accroître sensiblement le nombre d'orifices pour obtenir un taux d'ouvert équivalent. Or, la multiplication des orifices tend généralement à fragiliser la couche acoustiquement résistive et à augmenter les coûts de fabrication.

Selon un autre mode de réalisation décrit dans le document WO1/48734, la couche acoustiquement résistive comprend une couche à propriété structurale qui présente des mèches qui forment deux séries de bandes pleines espacées entre elles et sécantes d'une série à l'autre et une couche à propriété acoustique qui se présente sous la forme d'un tissu.

Même si après polymérisation, les couches à propriété structurale et à propriété acoustique forment une pièce d'un seul tenant, la surface de la couche à propriété structurale qui n'est pas en contact avec la couche à propriété acoustique présente des aspérités en surface.

Aussi, la présente invention vise à proposer un panneau pour le traitement acoustique dont la couche acoustiquement résistive a des caractéristiques mécaniques et aérodynamiques optimisées.

A cet effet, l'invention a pour objet un panneau pour le traitement acoustique rapporté au niveau d'une surface d'un aéronef, comprenant de l'extérieur vers l'intérieur une couche poreuse acoustiquement résistive, au moins une structure alvéolaire et une couche réflectrice ou imperméable, ladite couche poreuse acoustiquement résistive comprenant au niveau de la surface extérieure susceptible d'être en contact avec les écoulements aérodynamiques une feuille ou tôle comprenant des zones ouvertes laissant passer les ondes sonores et des zones pleines ne laissant pas passer les ondes sonores, caractérisé en ce que la feuille ou tôle de la couche acoustiquement résistive est métallique et comprend des ensembles de microperforations, chaque ensemble de microperforations formant une zones ouvertes, les ensembles de microperforations étant séparés entre eux par les zones pleines qui définissent une première série de bandes disposées selon une première direction et une deuxième série de bandes disposées selon une deuxième direction sécante à la première direction, les bandes de chaque série étant espacées de manière à séparer chaque ensemble de microperforations, les microperforations ayant des formes oblongues dont la plus grande dimension est orientée selon le sens des flux s'écoulant au niveau de la surface de la couche acoustiquement résistive, les microperforations étant alignées selon plusieurs lignes pour un même ensemble et disposées en quinconce d'une ligne à l'autre.

Cette solution est optimale pour les caractéristiques aérodynamiques grâce à la présence des microperforations et pour les caractéristiques mécaniques grâce aux zones pleines sous forme de bandes qui assurent la reprise des efforts. D'autres caractéristiques et avantages ressortiront de la description qui va suivre de l'invention, description donnée à titre d'exemple uniquement, en regard des dessins annexés sur lesquels :
- la figure 1 est une vue en élévation d'une couche acoustiquement résistive selon l'invention, et
- la figure 2 est une coupe illustrant une variante de profil de perforations.

Des techniques ont été développées pour réduire le bruit émis par un aéronef, et notamment le bruit émis par un ensemble propulsif, en disposant, au niveau des parois des conduits, des revêtements visant à absorber une partie de l'énergie sonore, notamment en utilisant le principe des résonateurs d'Helmholtz. De manière connue, un revêtement pour le traitement acoustique, également appelé panneau acoustique, comprend de l'extérieur vers l'intérieur une couche poreuse acoustiquement résistive, au moins une structure alvéolaire et une couche réflectrice ou imperméable.

Par couche, on entend une ou plusieurs couches de même nature ou non.

Une structure en nid d'abeilles est utilisée pour former la structure alvéolaire.

Une tôle est généralement utilisée pour former la couche réflectrice imperméable.

Différents types de matériaux peuvent être utilisés pour le nid d'abeilles et la tôle réflectrice.

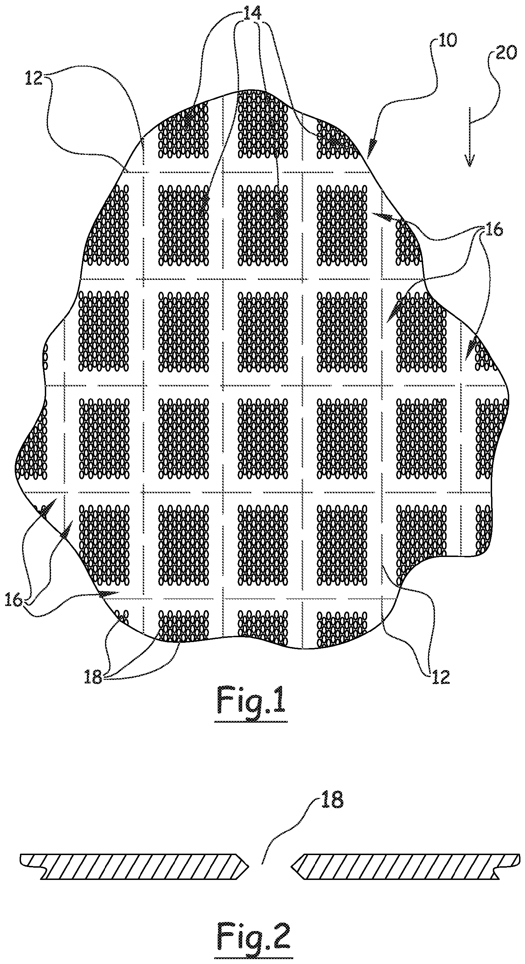

Sur la figure 1, on a représenté en 10 une couche acoustiquement résistive avec en pointillés les parois latérales 12 d'une structure alvéolaire.

Selon un mode de réalisation connu, la structure alvéolaire est réalisée à partir d'un nid d'abeilles.

Selon un mode de réalisation privilégié, la structure alvéolaire comprend d'une part une pluralité de premières bandes dites bandes longitudinales disposées dans des plans radiaux incorporant l'axe longitudinal de la nacelle, et d'autre part, une pluralité de secondes bandes dites bandes transversales sécantes aux plans radiaux. De préférence, au niveau de chaque point d'intersection avec les bandes transversales, chaque bande longitudinale est sensiblement perpendiculaire à la tangente de chaque bande transversale au point considéré.

Selon un avantage important de ce mode de réalisation, les bandes sont éventuellement mises en forme préalablement à l'assemblage et ne sont plus déformées une fois assemblées ou lorsque les couches réflectrices ou acoustiquement résistives sont mises en place.

Le panneau acoustique ainsi formé ayant des formes adaptées à celles de la surface à traiter, il n'est plus déformé lors de sa mise en place. Par conséquent, la liaison entre la structure alvéolaire et la couche réflectrice ou la couche acoustiquement résistive ne risque plus d'être endommagée et la position des parois latérales 12 des conduits délimités par les bandes transversales et longitudinales est parfaitement connue.

La couche 10 acoustiquement résistive est une structure poreuse ayant un rôle dissipatif, transformant partiellement l'énergie acoustique de l'onde sonore la traversant en chaleur. Elle comprend des zones dites zones ouvertes 14 susceptibles de laisser passer les ondes acoustiques et d'autres dites zones fermées 16 ou pleines ne laissant pas passer les ondes sonores mais destinées à assurer la résistance mécanique de ladite couche. Cette couche 10 acoustiquement résistive se caractérise notamment par un taux de zone ouverte qui varie essentiellement en fonction du moteur, des composants constituant ladite couche.

Les zones ouvertes 14 de la couche acoustiquement résistive sont disposées en fonction de la position des parois latérales 12 de la structure alvéolaire afin de déboucher dans les cavités délimitées par les parois latérales 12 et non de manière chevauchante avec les parois latérales 12.

La couche acoustiquement résistive 10 comprend au niveau de la surface extérieure susceptible d'être en contact avec les écoulements aérodynamiques une feuille ou tôle comprenant des zones ouvertes 14 séparées par des zones pleines 16, lesdites zones pleines 16 définissant un réseau permettant la reprise des efforts.

Selon les cas, la couche acoustiquement résistive comprend une seule feuille ou tôle ou un complexe comprenant au moins une tôle ou feuille et au moins un tissé ou un non tissé.

Selon l'invention, les zones pleines 16 définissent au moins une série de bandes espacées de manière à délimiter des zones ouvertes 14. Selon un mode de réalisation, les zones pleines 16 définissent des bandes, une première série de bandes disposées selon une première direction et une seconde série de bandes disposées selon une seconde direction sécante à la première direction (sensiblement perpendiculaire selon l'exemple illustré), les bandes de chaque série étant espacées de manière à délimiter des zones ouvertes 14. Les bandes formant les zones pleines 16 sont disposées au droit des parois latérales 12. En variante, on pourrait envisager plus de deux séries de bandes.

Avantageusement, la largeur des bandes de zones pleines est au plus égale à la plus petite des valeurs suivantes :
- 10 mm ;
- 30% de la largeur des zones ouvertes 14.

Les zones pleines 16 sont adaptées pour assurer la fonction structurelle et la reprise des efforts, notamment selon la première direction et selon la seconde direction. Selon des variantes, les zones pleines 16 peuvent permettre le passage d'un circuit de dégivrage à air chaud ou de type électrique.

Selon l'invention, les zones ouvertes 14 comprennent une pluralité de microperforations 18 dont la plus grande dimension est inférieure à 2 mm, et de préférence est inférieure à 1,2 mm.

Selon l'invention, la feuille ou tôle de la couche acoustiquement résistive comprend des ensembles de microperforations 18, chaque ensemble de microperforations formant une zones ouvertes 14, les ensembles de microperforations étant séparés entre eux par au moins une série de bandes espacées de zones pleines 16.

Selon un mode de réalisation, les microperforations 18 ont une forme oblongue dont la plus grande dimension est orientée selon le sens 20 des flux s'écoulant au niveau de la surface de la couche acoustiquement résistive. Cette forme permet d'augmenter l'efficacité des microperforations 18.

De préférence, les microperforations 18 sont alignées selon plusieurs lignes pour une même zone ouverte et disposées en quinconce d'une ligne à l'autre.

Selon un mode de réalisation, les microperforations 18 ont un profil qui s'évase au moins au niveau d'une surface. Selon un mode de réalisation, les microperforations ont un profil tel que défini sur la figure 2. Ainsi, la section de la microperforation 18 a un profil en diabolo, avec une section réduite qui s'élargit de part et d'autre afin de déboucher en surface par des sections plus larges. Ce type de profil est intéressant pour des fonctions aérodynamiques.

La couche acoustiquement résistive peut comprendre des perforations ou des microperforations prévues pour faire communiquer l'intérieur des cellules de la structure alvéolaire avec l'extérieur, certaines perforations ou micorperforations étant ainsi destinées au traitement acoustique et d'autres au traitement du givre.

Avantageusement, au moins les perforations ou microperforations prévues pour le traitement du givre sont inclinées et ne sont pas normales à la surface extérieure de la couche acoustiquement résistive afin d'évacuer l'air chaud de manière laminaire au niveau de la surface extérieure à traiter. Cette configuration permet également de diminuer le risque d'obstruction des trous (perforations ou microperforations ), notamment par la pollution.

Selon un premier mode de réalisation les microperforations 18 sont réalisées par perforation au moyen d'un faisceau d'électrons, soit avec un mode de fonctionnement à impulsion en continue ou un mode de fonctionnement à multi-impulsion de type à percussion ou à trépassage.

Selon un autre mode de réalisation, les perforations réalisées au niveau de la couche acoustiquement résistive peuvent être réalisées par un usinage chimique. Cependant, l'invention n'est pas limitée à ce mode de réalisation.

En variante, il est possible de faire au préalable une zone de plus faible épaisseur, notamment par usinage chimique, au niveau des zones où seront pratiquées les microperforations tout en gardant des zones non perforées plus épaisses pour assurer la tenue mécanique.

Dans un premier temps, un masque recouvrant les parties ne devant pas être perforées est appliqué. En suivant, on applique une solution d'attaque en surface qui au droit des zones non protégées par le masque va par un processus électrochimique dissoudre le métal et créer les perforations. De préférence, la tôle à perforer est immergée dans une solution d'attaque.

Avantageusement, la tôle est métallique, de préférence en titane, et la solution d'attaque est adaptée au matériau de la tôle pour provoquer un phénomène de corrosion dudit matériaux de façon à obtenir une perforation.

A titre d'exemple, la gamme d'usinage pourrait être la suivante :
- préparation de la surface afin d'obtenir une meilleure adhérence du masque et en rendant possible son enlèvement par un simple pelage,
- mise en place du masque sur toute la surface,
- retrait d'une partie du masque afin de découvrir les zones à usiner,
- immersion dans la solution d'attaque,
- rinçage,
- neutralisation éventuelle,
- rinçage,
- séchage,
- démasquage final.

Cette solution pour obtenir les perforations a pour avantage de ne pas soumettre la tôle à un échauffement localisé susceptible d'engendrer des contraintes résiduelles comme pourrait le faire un usinage à l'aide d'un faisceau laser ou sans arrachage de matière comme pourrait le faire un usinage conventionnel.

Ainsi, cette solution engendre des contraintes résiduelles moins importantes ce qui permet d'augmenter la durée de vie de la pièce et de réduire les opérations de maintenance. De ce fait, les visites de contrôle et les opérations de maintenance sont espacées ce qui permet de réduire le temps d'immobilisation de l'aéronef.

Selon un autre avantage, cette solution permet de ne pas déformer la pièce lors de la perforation.

Avantageusement, cette opération d'usinage est réalisée sur une tôle déjà mise en forme selon la forme de la structure alvéolaire. En suivant, la couche acoustiquement résistive est reliée par soudage à la structure alvéolaire.

L'usinage chimique peut provoquer l'emprisonnement d'éléments étrangers (ions) dans un réseau cristallin de la tôle. Lors de l'assemblage, l'opération de soudage provoque une élévation de température qui permet de libérer ces éléments étrangers. Par conséquent, cette opération permet de réduire encore les contraintes résiduelles.

## Revendications

1. Panneau pour le traitement acoustique rapporté au niveau d'une surface d'un aéronef, comprenant de l'extérieur vers l'intérieur une couche poreuse acoustiquement résistive, au moins une structure alvéolaire et une couche réflectrice ou imperméable, ladite couche poreuse acoustiquement résistive comprenant au niveau de la surface extérieure susceptible d'être en contact avec les écoulements aérodynamiques une feuille ou tôle comprenant des zones ouvertes (14) laissant passer les ondes sonores et des zones pleines (16) ne laissant pas passer les ondes sonores, **caractérisé en ce que** la feuille ou tôle de la couche acoustiquement résistive est métallique et comprend des ensembles de microperforations (18), chaque ensemble de microperforations formant une zones ouvertes (14), les ensembles de microperforations étant séparés entre eux par les zones pleines qui définissent une première série de bandes disposées selon une première direction et une deuxième série de bandes disposées selon une deuxième direction sécante à la première direction, les bandes de chaque série étant espacées de manière à séparer chaque ensemble de microperforations (18), les microperforations (18) ayant des formes oblongues dont la plus grande dimension est orientée selon le sens des flux s'écoulant au niveau de la surface de la couche acoustiquement résistive, les microperforations (18) étant alignées selon plusieurs lignes pour un même ensemble (14) et disposées en quinconce d'une ligne à l'autre.

2. Panneau pour le traitement acoustique selon la revendication 1, **caractérisé en ce que** la largeur des bandes de zones pleines est au plus égale à la plus petite des valeurs suivantes :
- 10 mm ;
- 30% de la largeur des zones ouvertes (14).

3. Panneau pour le traitement acoustique selon l'une quelconque des revendications 1 à 2, **caractérisé en ce que** les microperforations (18) ont une grande dimension inférieure à 2 mm.

4. Nacelle comprenant un panneau pour le traitement acoustique selon l'une quelconque des revendications précédentes.

5. Aéronef comprenant un panneau pour le traitement acoustique selon l'une quelconque des revendications 1 à 4.

## Patentansprüche

1. Platte für die Schallbehandlung, die im Bereich einer Oberfläche eines Luftfahrzeugs angebracht ist und von außen nach innen eine poröse schalldämmende Schicht, wenigstens eine Kammerstruktur und einer reflektierende oder undurchlässige Schicht aufweist, wobei die poröse schalldämmende Schicht im Bereich der äußeren Schicht, die dazu eingerichtet ist, mit den aerodynamischen Strömungen in Kontakt zu stehen, ein Blatt oder Blech aufweist, das offene Bereiche (14) umfasst, die Schallwellen hindurchtreten lassen, und geschlossene Bereiche (16) umfasst, die Schallwellen nicht hindurchtreten lassen, **dadurch gekennzeichnet, dass** das Blatt oder Blech der schalldämmenden Schicht aus Metall ist und Gruppen von Mikroperforationen (18) aufweist, wobei jede Gruppe von Mikroperforationen einen offenen Bereich (14) bildet und die Gruppen von Mikroperforationen untereinander durch geschlossene Bereiche getrennt sind, die eine erste Reihe von Bändern bilden, die in eine erste Richtung ausgerichtet sind, und eine zweite Reihe von Bändern bilden, die in einer zweiten Richtung angeordnet sind, die die erste Richtung schneidet, wobei die Bänder jeder Reihe in einem Abstand angeordnet sind, um auf diese Weise die Gruppen von Mikroperforationen (18) jeweils zu trennen, und wobei die Mikroperforationen (18) längliche Formen aufweisen, deren größte Abmessung in Richtung des Flusses ausgerichtet ist, der im Bereich der Oberfläche der schalldämmenden Schicht fließt, und die Mikroperforationen (18) innerhalb einer Gruppe (14) entlang mehrerer Zeilen ausgerichtet sind und von Zeile zu Zeile untereinander versetzt angeordnet sind.

2. Platte für die Schallbehandlung nach Anspruch 1, **dadurch gekennzeichnet, dass** die Breite der geschlossenen Bereiche höchstens gleich dem kleinsten der folgende Werte ist:
- 10 mm;
- 30% der Breite der offenen Bereiche (14).

3. Platte für die Schallbehandlung nach einem der Ansprüche 1 bis 2, **dadurch gekennzeichnet, dass** die Mikroperforationen (18) eine große Abmessung unterhalb von 2 mm aufweisen.

4. Gondel mit einer Platte für die Schallbehandlung nach einem der vorhergehenden Ansprüche.

5. Luftfahrzeug mit einer Platte für die Schallbehandlung nach einem der Ansprüche 1 bis 4.

## Claims

1. Panel for acoustic treatment connected to a surface of an aircraft, comprising from the outside to the inside an acoustically resistive porous layer, at least one alveolar structure, and a reflective or impermeable layer, said acoustically resistive porous layer comprises, at the outside surface that can be in contact with the aerodynamic flows, one sheet or tin plate comprising open zones (14) that allow sound waves to pass and filled zones (16) that do not allow sound waves to pass, **characterized in that** the sheet or tin plate of the acoustically resistive layer is a sheet metal and comprises sets of microperforations (18), each set of microperforations forming an open zone (14), the sets of microperforations being separated from one another by filled zones that define a first series of bands arranged in a first direction and a second series of bands arranged in a second direction that is secant with the first direction, the bands of each series being spaced so as to separate each set of microperforations (18), the microperforations (18) having oblong shapes whose largest dimension is oriented in the direction of the flows that flow at the surface of the acoustically resistive layer, the microperforations (18) being aligned along several lines for the same set (14) and arranged in staggered rows from one line to the next.

2. Panel for acoustic treatment according to claim 1, wherein the width of the bands of filled zones is at most equal to the smallest of the following values:
- 10 mm;
- 30% of the width of the open zones (14).

3. Panel for acoustic treatment according to any of claims 1 to 2, wherein the microperforations (18) have a large dimension that is less than 2 mm.

4. Nacelle that comprises a panel for acoustic treatment according to any of the preceding claims.

5. Aircraft that comprises a panel for acoustic treatment according to any of claims 1 to 4.
